# FASCICULE DE BREVET EUROPEEN

(11) **EP 2 385 092 B1**
(45) Date de publication et mention de la délivrance du brevet: **13.03.2019**
(21) Numéro de dépôt: 11290211.9
(22) Date de dépôt: 29.04.2011
(51) Int. Cl.: C10G 3/00, C10G 50/00, C07C 1/24, C07C 2/08, C10L 1/04

(54) **Procédé flexible de transformation de l'ethanol en distillats moyens**
Flexibles Umwandlungsverfahren von Ethanol in Mitteldestillate
Flexible method for transforming ethanol into middle distillates

(30) Priorité: 06.05.2010 FR 1001951
(43) Date de publication de la demande: 09.11.2011
(73) Titulaire: IFP Energies nouvelles, 92500 Rueil-Malmaison (FR)
(72) Inventeur: Guillon Emanuelle, 69390 Vourles (FR); Cadran Nicolas, 69600 Oullins (FR); Touchais Natacha, 38200 Vienne (FR); Bournay Laurent, 69400 Chaussan (FR)
(74) Mandataire: IFP Energies nouvelles

(56) Documents cités:
- EP-A1- 2 055 382
- EP-A1- 2 123 736
- WO-A1-2010/015732
- WO-A1-2010/015733
- WO-A2-2009/079213
- FR-A1- 2 901 804

## Description

### Domaine de l'invention

La présente invention concerne la transformation d'éthanol et plus particulièrement de bioéthanol en base carburants.

Elle concerne plus particulièrement un procédé catalytique flexible de transformation de l'éthanol en distillats moyens.

### Art Antérieur

La demande pour une utilisation de la biomasse en remplacement partiel des ressources pétrolières pour la synthèse de carburants va croissant. Ainsi l'utilisation de bioéthanol pour la synthèse de bases pour carburants reçoit un intérêt de plus en plus marqué.

La demande pour une utilisation de la biomasse en remplacement partiel des ressources pétrolières pour la synthèse de carburants va croissant. Ainsi l'utilisation de bioéthanol pour la synthèse de bases pour carburants reçoit un intérêt de plus en plus marqué.

Le bioéthanol est de l'étnanol d'origine agricole, c'est à dire qu'il est produit à partir de source renouvelable issue de la biomasse telle que par exemple les matières vivantes végétales.

La majeure partie de l'éthanol est produit par fermentation des sucres contenus dans les matières premières d'origine végétale. A partir des plantes sucrières, la première étape de la transformation consiste à obtenir un jus sucré par extraction à l'eau chaude pour la betterave ou par broyage et pressage pour la canne à sucre. Après concentration éventuelle, ces jus ou sirop, sont introduits dans des fermenteurs où se déroule la transformation biologique des sucres en éthanol avec la coproduction de CO₂ sous l'action de microorganismes tels que par exemple les levures. Les vins obtenus contiennent environ 10% d'alcool dans l'eau. Une étape de distillation permet de parvenir à la composition azéotropique du binaire éthanol/eau (8% d'eau). Afin d'obtenir une déshydratation complète, un passage sur tamis moléculaire est nécessaire. Dans les plantes céréalières telles que le maïs et le blé, les sucres fermentescibles en éthanol sont présents sous la forme d'un polymère appelé amidon, pour les libérer une étape préalable d'hydrolyse catalysée par des enzymes est nécessaire.

De nouvelles technologies sont en cours de développement afin de permettre la transformation de la biomasse lignocellulosique (bois, herbe, paille et autres déchets agricoles, etc.) en bioéthanol.

L'éthanol est utilisable comme biocarburant dans les moteurs à essence. Ce produit présente des avantages notables : indice d'octane élevé, une miscibilité en toute proportion dans les essences et une densité voisine. Il s'agit d'un vecteur énergétique issu de l'agriculture et appartenant à la famille des énergies renouvelables. Il existe plusieurs types de carburants contenant de l'éthanol la plupart sont des mélanges d'essence et d'éthanol à différentes proportions. On les désigne par la lettre E suivie du pourcentage d'éthanol dans le mélange : par exemple du E85 représente un carburant contenant 85% d'éthanol et 15% d'essence. Dans cette nomenclature, E100 désigne l'éthanol pur. On trouve ainsi du E5, E7, E10, E15, E20, E85, E95, E100 en fonction du pays dans lequel on se trouve et de l'utilisation que l'on veut en faire.

En France, la commercialisation de l'E85 aux particuliers, légalement nommé Superéthanol, est officielle depuis le 1er janvier 2007.

En Europe, les pétroliers continuent à transformer l'éthanol en ETBE (éthyl tertio butyl éther) qui peut être incorporé à l'essence jusqu'à hauteur de 15 %. L'ETBE présente l'avantage d'être mieux adapté aux moteurs. En effet, l'incorporation directe de l'éthanol à l'essence pose certaines difficultés techniques : le mélange essence/éthanol a une pression de vapeur plus élevée et tolère mal la présence de traces d'eau. Ces difficultés peuvent être surmontées par une reformulation des bases essence et par l'élimination des traces d'eau dans les cuves. Néanmoins, l'ETBE est moins vertueux pour l'environnement. Le parc automobile européen se caractérise par la forte proportion de motorisation diesel, il en résulte que le gazole est consommé en très forte proportion par rapport à l'essence. Les biocarburants incorporables au pool gazole sont donc particulièrement apprécié en Europe.

L'utilisation de l'éthanol est essentiellement destinée à la production d'essence, et non à la production de gazoles et kérosènes. Une autre voie très prometteuse est l'utilisation de l'éthanol comme biocarburant dans les moteurs diesel. Le biocarburant E-Diesel est un mélange qui se compose de diesel entre 85% et 95%, d'éthanol anhydre (sans eau) et un package d'additifs spécialement réalisés pour la stabilité du mélange et pallier certains des inconvénients du bioethanol comme par exemple son faible indice de cétane, son faible pouvoir lubrifiant.

Mélanger le diesel conventionnel avec de l'éthanol et l'additif améliore le fonctionnement de la combustion et augmente légèrement la volatilité du combustible. Le résultat principal est la réduction des émissions de gaz polluants réglementés tels que les particules (PM10) et les fumées. Cette diminution se doit au contenu en oxygène du biocarburant qui limite la formation des particules lors de la combustion du carburant. En effet ces molécules oxygénées permettent une amélioration sensible de la qualité de la combustion par la présence de comburant à l'endroit même où la réaction d'oxydation se fait. Le mélange du bioethanol avec le diesel a aussi pour conséquence et inconvénient principal la réduction du point d'éclair.

La transformation de l'éthanol en hydrocarbures est donc une route intéressante pour valoriser les ressources renouvelables vers des carburants.

La littérature est très riche sur la transformation d'alcools de type méthanol en oléfines ou aromatiques pour produire une coupe essence sur des catalyseurs acides, souvent zéolithiques. En effet, dans les années 1980, à la suite de la crise pétrolière, la transformation du méthanol en oléfines légères a fait l'objet d'un intérêt scientifique et industriel. Certains brevets sont orientés vers la production d'oléfines en C2-C3, C3 ou coupe essence.

De nombreux brevets décrivent la transformation de méthanol en oléfines légères sur différents catalyseurs acides tel que par exemple les brevets US 4 935 568, US 5 714 662, ou US 4 992 611 ou la transformation du méthanol en aromatiques.

Le procédé de transformation de méthanol en oléfines légères appelé procédé MTO (Methanol to Olefin) opère à très haute température et produit une quantité non négligeable d'aromatiques et d'éthylène.

Couplé à un procédé d'oligomérisation, la transformation à partir de méthanol permet d'obtenir des fractions distillats moyens (kérosène + gazole) en deux étapes (production d'oléfines légères puis oligomérisation pour convertir les oléfines en un effluent liquide oléfinique hydrocarboné de poids moléculaire moyen plus élevé correspondant aux fractions gazole et kérosène). Il existe différents brevets qui revendiquent des procédés différents, utilisant souvent la zéolithe ZSM-5 dans les deux étapes.

Les brevets US 4 579 999, US 5 146 032, US 5 177 279 et US 4 898 717 décrivent le procédé MTO+MOGD (methanol to olefin + olefin to gasoline and distillates).

D'autres brevets décrivent la transformation d'oxygénés en essence et distillats (coupe C4-C12) en une seule étape de déshydratation-oligomérisation. Le brevet US 6 372 949 décrit une telle transformation en une étape utilisant un catalyseur composite comprenant une zéolithe monodimensionnelle 10 MR choisie dans le groupe formé par la ZSM 22, ZSM 23, ZSM 35, ZSM 48, ZSM 57 et ferrierite, seule ou en mélange, avec une zéolithe multidimensionnelle ayant une taille de pore moyenne et en particulier la zéolithe ZSM-5. Cependant, la coupe distillat obtenue est une coupe distillats moyens légère, et par conséquent non incorporable au pool gazole.

Les brevets de l'art antérieur décrivent donc la transformation d'oxygénés, et en particulier de méthanol et/ou de dimethylether, en oléfines suivie de l'oligomérisation des oléfines obtenues pour produire un effluent oléfinique hydrocarboné de poids moléculaire moyen plus élevé et correspondant aux fractions gazole et/ou kérosène.

Cependant, la transformation de méthanol en oléfines légères génère la production de composés aromatiques à une quantité comprise entre 8 et 15% poids par rapport à la masse totale des composés hydrocarbonés comme décrit dans le brevet US 4 506 106 et pouvant même aller jusqu'a 50% poids dans le cas du procédé MTG (Methanol to Gasoline) décrit dans le brevet US 5 602 289. La formation de ces composés aromatiques est associée à la formation de composés paraffiniques possédant une chaîne hydrocarbonée courte. La présence de ces produits aromatiques et paraffiniques nuit à la production de fraction gazole et kérosène avec des rendements élevés car ils diminuent le rendement en oléfines, seuls composés pouvant être transformés de façon efficace et intéressante dans les conditions opératoires de l'étape d'oligomérisation. EP2055382 divulgue un procédé pour la transformation d'alcools ayant au moins 2 atomes de carbone en base carburants diesel. WO2010015732 divulgue un procédé de transformation d'au moins un composé aliphatique ayant de 1 à 18 atomes de carbone et portant une fonction alcool pour la production de kérosene et/ou de diesel.

Un objectif de la présente invention est de fournir un procédé de production de bases hydrocarbonées distillats moyens (gazole et/ou kérosène), stables, incorporable au pool carburant et à des rendements élevés, à partir d'éthanol produit à partir de sources renouvelables issue de la biomasse (plantes sucrières, amylacées ou encore biomasse ligno-cellulosique) également appelé bioéthanol.

Le procédé selon l'invention mettant en oeuvre un enchaînement comprenant une étape de transformation d'une charge bioéthanol aqueuse produit à partir de source renouvelable issue de la biomasse en oléfine suivie d'une étape oligomérisation, les deux étapes utilisant des systèmes catalytiques spécifiques, permet de minimiser la production de composés aromatiques à l'issue de la première étape et donc de maximiser la production de bases distillats moyens, ce qui constitue à la fois un atout pour le raffineur, et un avantage du point de vue du développement durable.

### Objet de l'invention

La présente invention décrit donc un procédé de production de bases hydrocarbonées distillats moyens à partir d'une charge éthanol produite à partir de source renouvelable issue de la biomasse, ledit procédé comprenant au moins :
a) une étape de purification de ladite charge,
b) une étape de transformation de ladite charge purifiée issue de l'étape a) en un effluent oléfinique léger comprenant au moins 30% poids d'oléfines ayant entre 4 à 6 atomes de carbone par rapport à la masse totale des composés hydrocarbonés formés, ladite étape opérant en présence d'un catalyseur comprenant une ferrierite,
c) une étape de séparation de l'effluent oléfinique issu de l'étape b) de manière à éliminer au moins une partie de l'eau formée lors de l'étape b) et à produire au moins un effluent gazeux hydrocarboné ayant majoritairement un nombre d'atomes de carbone inférieur ou égale à 3 et au moins un effluent liquide hydrocarboné oléfinique ayant majoritairement plus de 4 atomes de carbone,
d) une étape d'oligomérisation d'au moins une partie des effluents hydrocarbonés issus de l'étape c) en présence d'un catalyseur amorphe comprenant de la silice alumine ou zéolithique choisie parmi les zéolithes ZSM-5, NU-10 et ZBM-30 prises seules ou en mélange, produisant des bases hydrocarbonées distillats moyens,
e) une étape de fractionnement de l'effluent issu de l'étape d) d'oligomérisation.

Dans la suite de la description, on entend par effluent oléfinique un effluent qui comprend une teneur en oléfines supérieure à 50% poids, de préférence supérieure à 60% poids et de manière préférée supérieure à 70% poids par rapport à la masse totale des composés hydrocarbonés contenu dans ledit effluent, les autres composés hydrocarbonés étant avantageusement des paraffines, des composés aromatiques et des naphtènes.

### Description détaillée de l'invention

### Charge

La charge traitée dans le procédé selon l'invention est une charge éthanol produite à partir de source renouvelable issue de la biomasse aussi appelée bioéthanol.

Il s'agit donc d'une charge produite par voie biologique, par fermentation de sucres issus par exemple des cultures de plantes sucrières (saccharose, glucose, fructose), betteraves, ou encore des plantes amylacées (amidon) ou de la biomasse lignocellulosique ou cellulose hydrolysée (glucose majoritaire et xylose, galactose), contenant des quantités variables d'eau.

Ladite charge est avantageusement obtenue par fermentation à partir de trois sources : 1) le sucrose de canne ou de betterave, 2) l'amidon présent dans les céréales et les tubercules et 3) la cellulose et l'hémicellulose présente dans le bois, les herbes et autres biomasses lignocellulosiques, l'amidon, la cellulose et l'hémicellulose devant être hydrolysées en sucres avant de subir une étape de fermentation.

La charge bioethanol utilisée selon l'invention contient donc majoritairement de l'éthanol, à hauteur de plus de 50% poids et de préférence plus de 70% poids et contient également avantageusement une teneur en eau supérieure à 2% poids, de préférence supérieure à 5% poids et de manière préférée supérieure à 10% poids, une teneur en impureté cationique telle que par exemple les ions Na⁺ Ca²⁺, Mn²⁺, Fe²⁺, Cu²⁺, Zn^{z+} avantageusement inférieure à 0,5% poids, une teneur en impureté anionique telle que par exemple les ions Cl⁻, sulfate, nitrite, nitrate, phosphates avantageusement inférieure à 0,5% poids, une teneur en autre alcool tels que par exemple le méthanol ou le butanol avantageusement inférieure à 10% poids, et de préférence inférieure à 5% poids, une teneur en composés oxygénés autres que les alcools tels que par exemple les éthers, les acides, les cétones, les aldéhydes et/ou les esters avantageusement inférieure à 1% poids et une teneur en azote et en soufre avantageusement inférieure à 0,5% poids, les pourcentages poids étant exprimés par rapport à la masse totale de ladite charge.

Conformément au procédé selon l'invention, la charge subit une étape de purification de manière à éliminer les impuretés cationiques et anioniques ainsi qu'au moins une partie des composés oxygénés pour limiter la désactivation du catalyseur placé en aval.

L'étape de purification est avantageusement mise en oeuvre par des moyens connus de l'homme du métier, tel que par exemple l'utilisation d'au moins une résine, l'adsorption sur solide choisis parmi les tamis moléculaires, le charbon actif, l'alumine et les zéolithes, la distillation, l'hydrogénation en présence d'un catalyseur à base de métal noble , par exemple le nickel, afin d'obtenir une charge purifiée répondant au niveau d'impuretés compatibles avec le catalyseur.

Conformément à l'étape b) du procédé selon l'invention, la charge purifiée issue de l'étape a) subit une étape de transformation en un effluent oléfinique léger comprenant au moins 30% poids d'oléfines ayant entre 4 à 6 atomes de carbone par rapport à la masse totale des composés hydrocarbonés formés, ladite étape opérant en présence d'un catalyseur zéolithe ferrierite. Au cours de cette étape, les autres composés oxygénés (éthers, acides, cétones, aldéhydes et/ou esters) pouvant toujours être présents dans la charge bioethanol purifiée sont également préférentiellement transformés en hydrocarbures.

Les différents types structuraux sont décrits dans l'Atlas of zeolite framework types, Sixth Revized Edition 2007 (Ch.Baerlocher, L.B. McCusker, D.H. Oison).

La zéolithe ZBM-30 est décrite dans le brevet EP-A-46 504.

La zéolithe ZSM 48 est décrite dans Schlenker, J.L. Rohrbaugh, W.J., Chu, P., Valyocsik, E.W. and Kokotailo, G.T. Title: The framewrok topolgy of ZSM-48: a high silica zeolite Reference: Zeolites, 5, 355-358 (1985) Material *ZSM-48".

La zéolithe IM-5 est décrite dans le brevet FR-2 754 809.

La zéolithe IZM-2 est décrite dans la demande de brevet FR-A-2 918 050.

La zéolithe mise en oeuvre dans le catalyseur utilisé dans l'étape b) du procédé selon l'invention peut avantageusement être modifiée par désalumination ou désilication selon toute méthode de désalumination ou désilication connue de l'homme du métier.

Ledit catalyseur utilisé dans l'étape b) du procédé selon l'invention comprend également avantageusement au moins une matrice de type oxyde également appelé liant. On entend par matrice selon l'invention, une matrice amorphe ou mal cristallisée.

Ladite matrice est avantageusement choisie parmi les éléments du groupe formé par les argiles (telles que par exemple parmi les argiles naturelles telles que le kaolin ou la bentonite), la magnésie, les alumines, les silices, les silice-alumines, les aluminates, l'oxyde de titane, l'oxyde de bore, la zircone, les phosphates d'aluminium, les phosphates de titane, les phosphates de zirconium, et le charbon. De préférence ladite matrice est choisie parmi les éléments du groupe formé par les alumines, les silices et les argiles.

Dans un mode préféré, le liant possède une texture macroporeuse comme décrit dans le brevet US2009088595.

Les catalyseurs utilisés dans le procédé selon l'invention sont avantageusement mis en forme sous la forme de grains de différentes formes et dimensions. Ils sont avantageusement utilisés sous la forme d'extrudés cylindriques ou polylobés tels que bilobés, trilobés, polylobés de forme droite ou torsadée, mais peuvent éventuellement être fabriqués et employés sous la forme de poudre concassées, de tablettes, d'anneaux, de billes, de roues, de sphères. De préférence, lesdits catalyseurs sont sous forme d'extrudés ou de billes.

L'étape b) du procédé selon l'invention opère avantageusement à une température comprise entre 250 et 600°C, de préférence entre 300 et 600°C et de manière préférée entre 300 et 500°C, à une pression comprise entre 0 et 5MPa, de préférence entre 0 et 2,5 MPa et de manière préférée entre 0 et 1MPa et à une vitesse volumique horaire comprise entre 0,1 et 50 h⁻¹ et de préférence entre 0.5 et 15h⁻¹.

Dans l'étape b) du procédé selon l'invention, les catalyseurs utilisés et les conditions opératoires sont choisis de manière à maximiser la production d'oléfines ayant entre 4 et 6 atomes de carbone.

Conformément à l'invention, l'effluent oléfinique léger produit lors de l'étape b) comprend au moins 30%, de préférence au moins 40% et de manière préférée, au moins 50% poids d'oléfines ayant entre 4 à 6 atomes de carbone par rapport à la masse totale des composés hydrocarbonés formés. Outre la présence majoritaire d'oléfines ayant entre 4 et 6 atomes de carbone, l'effluent oléfinique léger comprend également avantageusement moins de 15%, de préférence moins de 12% et de manière préférée, moins de 10% poids de composés ayant un nombre d'atomes de carbone égal à 3, cet effluent étant avantageusement constitué de propylène et de propane, et avantageusement moins de 8% de préférence moins de 6%, de manière préférée, moins de 5% poids et de manière très préférée, moins de 4% poids de composés aromatiques formés lors de l'étape b), les pourcentages étant exprimés en pourcentages poids par rapport à la masse totale des composés hydrocarbonés formés.

Par ailleurs, une quantité d'eau supérieure à 30% et de préférence supérieure à 35% poids par rapport à la masse totale de l'effluent produit lors de l'étape b) est avantageusement produite.

La conversion de la charge bioéthanol dans l'étape b) est avantageusement supérieure à 90%, de préférence 95% et de manière préférée supérieure à 98%.

On entend par conversion de la charge bioéthanol, le rapport de la différence entre le débit massique d'éthanol (C₂H₅OH) en entrée et le débit massique d'éthanol (C₂H₅OH) en sortie de l'étape b) sur le débit massique de bioéthanol en entrée.

Un diluant à base d'eau ou de paraffines provenant d'une charge extérieure au procédé selon l'invention tel que par exemple des paraffines ayant une nombre de carbone compris entre 2 et 8 peut avantageusement être ajouté à la charge bioéthanol après purification dans un rapport molaire diluant sur charge, avantageusement compris entre 0,5 à 20 dans le but de stabiliser le catalyseur de l'étape b) du procédé selon l'invention.

L'étape b) de transformation de ladite charge purifiée, en un effluent oléfinique léger du procédé selon l'invention, est avantageusement mise en oeuvre dans au moins un réacteur en lit fixe, en lit mobile ou en lit fluidisé

Dans le cas ou l'étape b) est mise en oeuvre en lit fluidisé, le catalyseur prendra la forme de billes, de taille avantageusement inférieure à 500 microns et de préférence inférieure à 300 microns.

Dans le cas où l'étape b) est mise en oeuvre en lit fixe, la régénération du catalyseur utilisé dans ladite étape b) est avantageusement réalisée sous flux d'air par exemple en utilisant une recirculation de l'air de combustion avec ou sans eau afin de diluer l'oxygène et maîtriser l'exothermie de régénération. Dans ce cas, on peut avantageusement ajuster la teneur en oxygène en entrée du réacteur par un appoint d'air. La régénération a lieu à pression entre la pression atmosphérique (0 bar relatif) et la pression de réaction. La température de régénération est avantageusement choisie entre 400 et 600°C ; elle peut avantageusement varier en cours de régénération. La fin de la régénération est détectée quand il n'y a plus de consommation d'oxygène.

Dans le cas où l'étape b) est mise en oeuvre en lit mobile ou fluidisé, la régénération du catalyseur s'effectue en continu.

Conformément à l'invention, l'effluent oléfinique issu de l'étape b) subit une étape de séparation c) de manière à éliminer au moins une partie de l'eau formée lors de l'étape b) et à produire au moins un effluent gazeux ayant majoritairement un nombre d'atomes de carbone inférieur ou égale à 3 et au moins un effluent liquide hydrocarboné oléfinique ayant majoritairement plus de 4 atomes de carbone.

L'étape de séparation peut avantageusement être mise en oeuvre par toute méthode connue de l'homme du métier telle que par exemple la combinaison d'un ou plusieurs ballons séparateurs haute et/ou basse pression et haute et/ou basse température, et/ou d'étapes de distillation comprenant une ou plusieurs colonne de distillation et/ou de strippage haute et/ou basse pression, par la mise en oeuvre d'étapes d'extraction par solvant en association avec une zone de distillation, de flash et de décantation, par l'utilisation de tamis moléculaires ou d'adsorbants visant l'élimination résiduelle d'eau.

Dans un mode de réalisation préféré, au moins une partie de la base distillat moyen, recueillie avant ou après hydrogénation et de préférence après peut avantageusement être recyclée dans l'étape c) de séparation.

Une partie de l'eau éliminée lors de l'étape c) est avantageusement recyclée en amont de l'étape b) de transformation de ladite charge purifiée, servant de diluant de la charge bioéthanol purifiée.

L'effluent gazeux ayant majoritairement un nombre d'atomes de carbone inférieur ou égal à 3 est un effluent riche en éthylène, éthane, propylène et propane. Ledit effluent comprend avantageusement une teneur en composés ayant deux et trois atomes de carbone (C2 + C3) avantageusement supérieure à 70%, de préférence supérieure à 75% et de manière préférée, supérieure à 80% poids par rapport à la masse totale dudit effluent, dont au moins 50%, de préférence au moins 55% et de manière préférée au moins 60% poids sont des composés ayant deux atomes de carbones, éventuellement une teneur résiduelle en composés ayant plus de 4 atomes de carbone avantageusement inférieure à 30%, de préférence inférieure à 25% et de manière préférée inférieure à 20% poids par rapport à la masse totale dudit effluent.

Dans un mode de réalisation préféré, au moins une partie et de préférence la totalité dudit effluent gazeux est avantageusement recyclé en amont de l'étape b) de transformation de la charge bioéthanol purifiée en un effluent oléfinique léger.

Dans le cas où seulement une partie dudit effluent gazeux est avantageusement recyclée en amont de l'étape b) de transformation de la charge purifiée, l'autre partie non recylée est envoyée dans l'étape d) d'oligomérisation selon l'invention ou est purgée.

Dans un autre mode de réalisation préféré, la totalité dudit effluent gazeux ayant majoritairement un nombre d'atomes de carbone inférieur ou égale à 3 est avantageusement envoyé dans une section réactionnelle d'oligomérisation optionnelle, différente de l'étape d) d'oligomérisation selon l'invention, comprenant soit un catalyseur métallique homogène comprenant au moins un métal choisi parmi le nickel, le zirconium, le chrome, le molybdène, le titane et le fer, ledit métaux étant complexé avec des composés organiques tels que par exemple les dérivés pyridinique ou acétonate, lesdits catalyseurs homogènes étant connus de l'Homme de l'art, soit un catalyseur hétérogène comprenant au moins un métal choisi parmi le molybdène, le chrome et le nickel, pris seul ou en mélange et un support choisi parmi l'alumine, la silice alumine et les zéolithes, lesdits catalyseurs homogènes étant connus de l'homme du métier. Dans le cas ou un catalyseur métallique homogène est utilisé, ledit catalyseur est neutralisé et éliminé selon toute méthode connue de l'homme du métier.

L'effluent issu de ladite section réactionnelle d'oligomérisation optionnelle est avantageusement séparé dans une étape de séparation optionnelle, mise en oeuvre selon des méthodes connues de l'homme du métier.

Dans le cas où la production majoritaire de base hydrocarbonée de type kérosène est plus particulièrement recherchée, ledit effluent est avantageusement séparé en un effluent composé majoritairement d'hydrocarbures ayant moins de 9 atomes de carbones, c'est-à-dire ayant plus de 60% poids, de préférence plus de 70% poids, de composé hydrocarbures ayant moins de 9 atomes de carbone, les pourcentages poids étant exprimés par rapport à la masse totale dudit effluent et en un autre effluent composé majoritairement d'hydrocarbures ayant plus de 9 atomes de carbones, c'est-à-dire ayant plus de 60% poids, de préférence plus de 70% poids, de composé hydrocarbures ayant plus de 9 atomes de carbone, les pourcentages poids étant exprimés par rapport à la masse totale dudit effluent.

Dans le cas où la production majoritaire de base hydrocarbonée de type gazole est plus particulièrement recherchée, ledit effluent est avantageusement séparé en un effluent composé majoritairement d'hydrocarbures ayant moins de 12 atomes de carbones, c'est-à-dire ayant plus de 60% poids, de préférence plus de 70% poids, de composé hydrocarbures ayant moins de 12 atomes de carbone, les pourcentages poids étant exprimés par rapport à la masse totale dudit effluent et en un autre effluent composé majoritairement d'hydrocarbures ayant plus de 12 atomes de carbones, c'est-à-dire ayant plus de 60% poids, de préférence plus de 70% poids, de composés hydrocarbures ayant plus de 12 atomes de carbone, les pourcentages poids étant exprimés par rapport à la masse totale dudit effluent.

Ledit effluent composé majoritairement d'hydrocarbures ayant plus de 9 ou 12 atomes de carbones est avantageusement envoyé dans l'étape e) de séparation et l'effluent composé majoritairement d'hydrocarbures ayant moins de 9 ou 12 atomes de carbones est avantageusement envoyé dans l'étape d) d'oligomérisation du procédé selon l'invention.

L'effluent liquide hydrocarboné oléfinique ayant majoritairement plus de 4 atomes de carbone issu de l'étape c) de séparation contient majoritairement des oléfines ayant entre 4 et 6 atomes de carbone à une teneur supérieure à 50% poids, de préférence supérieure à 60% poids et de manière préférée, supérieure à 70% poids et produites lors de l'étape b) du procédé selon l'invention, les pourcentages poids étant exprimés par rapport à la masse totale dudit effluent.

Conformément à l'invention, au moins une partie des effluents hydrocarbonés issus de l'étape c) de séparation est envoyée dans une étape d'oligomérisation d)
De préférence, la totalité de l'effluent liquide hydrocarboné oléfinique ayant majoritairement plus de 4 atomes de carbone issu de l'étape c) de séparation est envoyée dans l'étape d'oligomérisation d), éventuellement en mélange avec au moins la partie de l'effluent gazeux hydrocarboné ayant majoritairement un nombre d'atomes de carbone inférieur ou égal à 3 issu de l'étape c) et n'ayant pas été recyclée en amont de l'étape b).

Au moins une partie de l'effluent léger comprenant les composés C3-C4 et/ou au moins une partie de la coupe essence issus de l'étape de fractionnement e) peuvent avantageusement être également recyclées dans l'étape d) d'oligomérisation du procédé selon l'invention et mélangé à au moins une partie des effluents hydrocarbonés issus de l'étape c) de séparation.

L'élimination partielle ou totale de l'eau lors de l'étape de séparation c) est fonction de la tolérance à l'eau du catalyseur d'oligomérisation utilisé en aval, dans l'étape d) d'oligomérisation ultérieure du procédé selon l'invention. La teneur en eau de l'effluent envoyé dans l'étape d) d'oligomérisation est avantageusement comprise entre 0 et 20000 ppm et de préférence entre 5 et 5000 ppm dans le cas ou le catalyseur placé en aval est un catalyseur de type zéolithique et comprise entre 5 et 1000 ppm et de préférence entre 5 et 500 ppm dans le cas ou le catalyseur placé en aval est un catalyseur amorphe. Conformément à l'invention, au moins une partie des effluents hydrocarbonés issus de l'étape c) de séparation subit une étape d) d'oligomérisation en présence d'un catalyseur amorphe comprenant de la silice alumine ou zéolithique choisie parmi les zéolithes ZSM-5, NU-10 et ZBM-30 prises seules ou en mélange, produisant des bases hydrocarbonées distillats moyens.
L'objectif de ladite étape d) d'oligomérisation est d'obtenir un effluent hydrocarboné oléfinique de poids moléculaire moyen plus élevé correspondant aux fractions distillats moyens, ledit effluent pouvant ainsi être facilement incorporable à un pool gazole et/ou kérosène.

Selon un mode de réalisation préféré, ledit catalyseur d'oligomérisation est un catalyseur amorphe comprenant et de préférence constitué d'un matériau minéral amorphe choisi parmi les silice alumines. Selon un autre mode de réalisation préféré, ledit catalyseur d'oligomérisation comprend au moins une zéolithe choisie parmi les zéolithes ZSM-5, NU-10 et ZBM-30, prises seules ou en mélange, de manière très préférée la zéolithe est la ZBM-30 et de manière encore plus préférée, la zéolithe est la ZBM-30 synthétisée en présence du structurant triéthylènetétramine.

La zéolithe mise en oeuvre dans le catalyseur utilisé dans l'étape d) du procédé selon l'invention peut avantageusement subir plusieurs post-traitements connus de l'homme de l'art tel que par exemple être modifiée par désalumination ou désilication selon toute méthode de désalumination, passivation de surface externe ou désilication connue de l'homme du métier, dans le but d'améliorer son activité.

Ledit catalyseur utilisé dans l'étape d) du procédé selon l'invention comprend également avantageusement au moins une matrice de type oxyde également appelé liant. On entend par matrice selon l'invention, une matrice amorphe ou mal cristallisée.

Ladite matrice est avantageusement choisie parmi les éléments du groupe formé par les argiles (telles que par exemple parmi les argiles naturelles telles que le kaolin ou la bentonite), la magnésie, les alumines, les silices, les silice-alumines, les aluminates, l'oxyde de titane, l'oxyde de bore, la zircone, les phosphates d'aluminium, les phosphates de titane, les phosphates de zirconium, et le charbon. De préférence ladite matrice est choisie parmi les éléments du groupe formé par les alumines, les argiles et les silices, de manière plus préférée ladite matrice est choisie parmi les alumines, et de manière encore plus préférée ladite matrice est l'alumine gamma.

Les catalyseurs utilisés dans l'étape d) du procédé selon l'invention sont avantageusement mis en forme sous la forme de grains de différentes formes et dimensions. Ils sont avantageusement utilisés sous la forme d'extrudés cylindriques ou polylobés tels que bilobés, trilobés, polylobés de forme droite ou torsadée, mais peuvent éventuellement être fabriqués et employés sous la forme de poudre concassées, de tablettes, d'anneaux, de billes, de roues, de sphères. De préférence, lesdits catalyseurs sont sous forme d'extrudés de taille comprise entre 1 et 10 mm.

L'étape d) d'oligomérisation d'au moins une partie des effluents hydrocarbonés issus de l'étape c) de séparation est avantageusement mise en oeuvre dans au moins un réacteur en lit fixe.

L'étape d) du procédé selon l'invention opère avantageusement à une température comprise entre 50 et 400°C, de préférence entre 100 et 350°C et de manière préférée entre 100 et 300°C, à une pression comprise entre 2 et 15 MPa, de préférence entre 2 et 8 MPa et de manière préférée entre 3 et 8 MPa et à une vitesse volumique horaire comprise entre 0,1 et 10 h⁻¹ et de préférence entre 0,4 et 5h⁻¹.

Conformément à l'invention, des bases hydrocarbonées distillats moyens (gazole et/ou kérosène) sont produites à l'issu de l'étape d) d'oligomérisation.

Le procédé selon l'invention est un procédé flexible en ce sens que les conditions opératoires et le choix du catalyseur dans l'étape d) d'oligomérisation permettent d'orienter la réaction vers l'un ou l'autre des produits cibles, à savoir dans un cas vers la production majoritaire d'une base hydrocarbonée de type gazole et dans l'autre d'une base hydrocarbonée de type kérosène.

Dans le cas où la production majoritaire de base hydrocarbonée de type gazole est plus particulièrement recherchée, l'étape d) d'oligomérisation opère avantageusement en présence d'un catalyseur comprenant au moins une zéolithe choisie parmi les zéolithes ZSM-5, NU-10 et ZBM-30 prises seules ou en mélange et à une température comprise entre 200 et 300°C, à une pression comprise entre 3 et 7MPa et à une vitesse volumique horaire comprise entre 0,1 et 5 h⁻¹.

Dans le cas ou la production majoritaire de base hydrocarbonée de type kérosène est plus particulièrement recherchée, l'étape d) d'oligomérisation opère avantageusement en présence d'un catalyseur amorphe, comprenant et de manière préférée constituée de silice alumine à une température comprise entre 100 et 300°C, à une pression comprise entre 2 et 8 MPa et à une vitesse volumique horaire comprise entre 0,1 et 5 h⁻¹. Les conditions opératoires de l'étape d) d'oligomérisation sont avantageusement ajustées de manière à convertir entre 50 et 99% par passe de l'effluent envoyé dans ladite étape et à obtenir un rendement en bases hydrocarbonées distillats moyens supérieure à 50%.

La conversion par passe est définie par la différence entre le débit massique en entrée des oléfines possédant entre 4 et 6 atomes de carbones et le débit en sortie de ces mêmes oléfines divisée par le débit massique en entrée des oléfines possédant entre 4 et 6 atomes de carbones.

Le rendement en distillats moyens est quant à lui défini comme le rapport entre le débit massique en sortie des composés possédant un point d'ébullition supérieur à 150°C et un point d'ébullition finale inférieur à 360°C et le débit massique en entrée des oléfines possédant entre 4 et 6 atomes de carbone.

Conformément à l'invention, l'effluent issu de l'étape d) d'oligomérisation comprenant les bases hydrocarbonées distillats moyens subit une étape de fractionnement dans au moins une colonne de distillation de manière à séparer lesdites bases en au moins deux coupes correspondants aux coupes essence et distillats moyens (gazole et/ou kérosène). Un effluent léger comprenant les composés C2-C4 peut également être séparé pour être valorisé pur ou en mélange selon les besoins du raffineur. Une fraction lourde ayant un point d'ébullition initial supérieur à 360°C peut également être avantageusement séparée. Ces produits cités ne sont nullement restrictifs.

Au moins une partie de l'effluent léger comprenant les composés C2-C4 et/ou au moins une partie de la coupe essence issus de l'étape de fractionnement e) peuvent avantageusement être recyclées dans l'étape d) d'oligomérisation du procédé selon l'invention.

Un des objectif de la présente invention étant de maximiser le rendement en base distillats moyens, ledit effluent léger et la coupe essence, non désirés, sont ainsi à nouveau oligomérisés dans l'étape d) du procédé selon l'invention permettant l'augmentation de leur poids moléculaire et ainsi l'augmentation de leur point d'ébullition et les rendre compatibles avec l'utilisation recherchée.

Selon une variante du procédé selon l'invention, au moins une partie de l'effluent léger séparé lors de l'étape de fractionnement e) peut avantageusement être recyclée dans l'étape b) de transformation de la charge purifiée en un effluent oléfinique léger et au moins une partie et de préférence la totalité de la coupe essence issue de l'étape de fractionnement e) est avantageusement recyclée dans l'étape d) d'oligomérisation du procédé selon l'invention.

Au moins une partie et de préférence la totalité de la base distillats moyens (gazole et/ou kérosène) issue de l'étape de fractionnement e) de l'effluent issu du réacteur d'oligomérisation subit avantageusement une étape d'hydrogénation des oléfines produites, dans le but d'augmenter l'indice de cétane desdites bases distillats moyens pour les rendre incorporable au pool carburant.

De préférence, au moins une partie et de préférence la totalité de la base distillats moyens (gazole et/ou kérosène) issu de l'étape de fractionnement e) est mise en contact avec un gaz riche en hydrogène en présence d'un catalyseur comprenant au moins un métal du groupe VIII, avantageusement choisi parmi le palladium et le nickel pris seul ou en mélange, et un support avantageusement choisi parmi l'alumine, la silice ou la silice-alumine.

Le catalyseur mis en oeuvre dans l'étape optionnelle d'hydrogénation comprend une teneur en palladium avantageusement comprise entre 0,1 et 10 % poids et/ou une teneur en nickel, avantageusement comprise entre 1 et 60 % poids par rapport à la masse totale du catalyseur.

L'étape optionnelle d'hydrogénation opère avantageusement à une température comprise entre 100 et 250°C en entrée du réacteur, à une pression comprise entre 2 et 5 MPa et à une vitesse volumique horaire comprise entre 0,05 et 8h-1.

On valide la performance de l'hydrogénation par une mesure du nombre de brome qui est avantageusement d'au plus 5 g Br/100g, dans le cas ou l'on souhaite saturer l'ensemble des composés insaturés présents dans la coupe à hydrogéner.

L'effluent issu de l'étape optionnelle d'hydrogénation contient majoritairement des hydrocarbures valorisables et incorporable au pool kérosène et/ou gazole.

Une étape de séparation optionnelle suivant l'étape d'hydrogénation est avantageusement mise en oeuvre pour permettre le fractionnement en une coupe kérosène et/ou une coupe gazole et/ ou une coupe ayant un point d'ébullition supérieur à 360°C.

Au moins une partie de la base distillats moyens peut avantageusement être recyclée dans l'étape c) de séparation du procédé selon l'invention de manière à améliorer la séparation de l'éthylène entre la phase gazeuse et la phase liquide.

### Description des figures

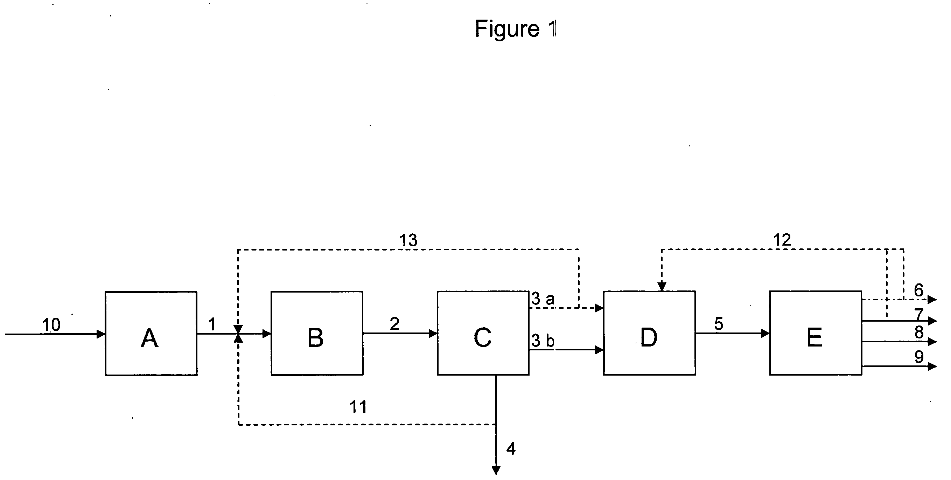

La figure 1 représente schématiquement le procédé de production de bases distillats moyens à partir d'éthanol de la présente invention dans un mode de réalisation particulier et sans étape d'hydrogénation optionnelle finale.

Sur la figure 1, la charge éthanol produite à partir de source renouvelable issue de la biomasse appelée bioéthanol est introduite dans une zone réactionnelle (A) via la conduite (10) dans laquelle ladite charge subit une étape de purification.

La charge ainsi purifiée (conduite 1) est ensuite envoyée dans une section réactionnelle (B) dans laquelle elle subit une étape b) de transformation de ladite charge purifiée issue de l'étape a) en un effluent oléfinique léger comprenant au moins 30% poids d'oléfines ayant entre 4 à 6 atomes de carbone par rapport à la masse totale des composés hydrocarbonés formés. Ledit effluent issu de l'étape b) est ensuite envoyé dans la section (C) via la conduite (2) dans laquelle il subit une étape c) de séparation de manière à éliminer au moins une partie de l'eau formée lors de l'étape b) via la conduite (4) et à séparer au moins un effluent gazeux hydrocarboné ayant un nombre d'atomes de carbone inférieur ou égale à 3 via la conduite (3a) et au moins un effluent liquide hydrocarboné oléfinique ayant plus de 4 atomes de carbone via la conduite (3b).

Selon une variante du procédé de l'invention représentée en pointillé, au moins une partie de l'eau éliminée lors de l'étape c) de séparation est recyclée en amont de la section réactionnelle (B), servant de diluant de la charge bioéthanol purifiée, via la conduite (11). Selon une autre variante du procédé de l'invention également représentée en pointillé, au moins une partie dudit effluent hydrocarboné gazeux ayant un nombre d'atomes de carbone inférieur ou égale à 3 est recyclé en amont de l'étape b) de transformation de la charge purifiée en un effluent oléfinique léger dans la section (B), via la conduite (13).

L'autre partie non recyclée dudit effluent hydrocarboné gazeux (conduite (3a)) et la totalité de l'effluent liquide hydrocarboné oléfinique ayant plus de 4 atomes de carbone (conduite (3b)), issus de l'étape de séparation c) sont envoyées dans une section réactionnelle (D) dans laquelle ces effluents hydrocarbonés subissent une étape d'oligomérisation produisant des bases hydrocarbonées distillats moyens. L'effluent issu de l'étape d) d'oligomérisation est ensuite envoyée dans une section de fractionnement (E) dans laquelle il est séparé en un effluent léger comprenant les composés C2-C4 via la conduite (6), en une coupe essence via la conduite (7), en une coupe distillats moyens (kérosène via la conduite (8) et gazole via la conduite (9)) à incorporer au pool carburant.

Selon un mode de réalisation représenté en pointillé, au moins une partie de l'effluent léger comprenant les composés C2-C4 et au moins une partie de la coupe essence sont recyclées dans l'étape d) via la conduite (12).

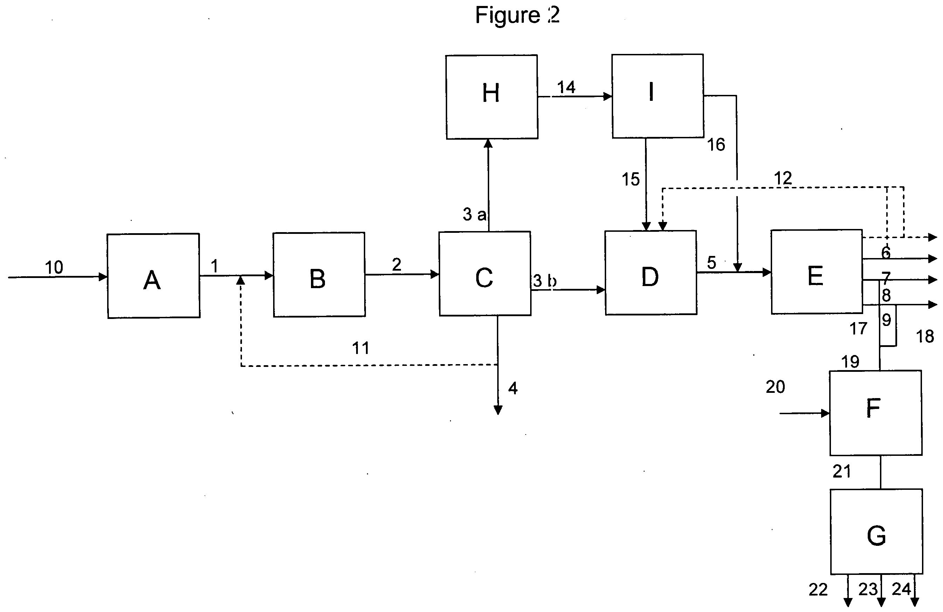

La figure 2 représente schématiquement une autre variante du procédé de l'invention, incluant l'étape d'hydrogénation optionnelle finale ainsi qu'un traitement particulier de l'effluent hydrocarboné gazeux ayant un nombre d'atomes de carbone inférieur ou égale à 3 issu de l'étape c) de séparation.

Jusqu'à la section (C) de séparation, la description de la figure 2 est identique à celle de la figure 1.

La totalité de l'effluent liquide hydrocarboné oléfinique ayant plus de 4 atomes de carbone issu de la section (C) est envoyée, via la conduite (3b), dans la section (D) d'oligomérisation produisant des bases hydrocarbonées distillats moyens via la conduite (5).

La totalité de l'effluent gazeux hydrocarboné ayant un nombre d'atomes de carbone inférieur ou égale à 3 est envoyé, via la conduite (3a), dans une section réactionnelle (H) dans laquelle il subit une étape d'oligomérisation sur un catalyseur métallique homogène ou sur un catalyseur hétérogène. L'effluent issu de la section (H) d'oligomérisation est ensuite envoyé dans une section (I) de fractionnement via la conduite (14) dans laquelle il est séparé en un effluent composé majoritairement d'hydrocarbures ayant moins de 9 atomes de carbones via la conduite (15) et en un effluent composé majoritairement d'hydrocarbures ayant plus de 9 atomes de carbones via la conduite (16), dans le cas ou la production de base hydrocarbonée de type kérosène est plus particulièrement recherchée.

L'effluent composé majoritairement d'hydrocarbures ayant moins de 9 atomes de carbones est ensuite envoyé en totalité, via la conduite (15), dans la section (D) d'oligomérisation et l'effluent composé majoritairement d'hydrocarbures ayant plus de 9 atomes de carbones est envoyé, via la conduite (16), en mélange avec l'effluent bases hydrocarbonées distillats moyens (conduite (5)) dans la section (E) de fractionnement dans laquelle il est séparé en un effluent léger comprenant les composés C2-C4 via la conduite (6), en une coupe essence via la conduite (7), en une coupe distillats moyens (kérosène via la conduite (8) et gazole via la conduite (9)).

Au moins une partie des bases gazole (conduite (18) et kérosène (conduite (17)) sont mélangées dans la conduite (19) et envoyées dans une section (F) d'hydrogénation des oléfines produites, ladite section étant alimentée en hydrogène via la conduite (20). L'effluent issu de l'étape optionnelle d'hydrogénation via la conduite (21) contient majoritairement des hydrocarbures valorisables et incorporable au pool kérosène et gazole. Ledit effluent est envoyé via la conduite (21) dans une section (G) de séparation permettant le fractionnement en une coupe kérosène (conduite 22), en une coupe gazole (conduite (23) et en une coupe ayant un point d'ébullition supérieur à 360°C (conduite 24).

Les exemples suivants illustrent l'invention sans en limiter la portée.

### Exemples

### Exemple 1 selon l'invention :

L'enchainement selon l'invention est mis en oeuvre dans l'exemple 1 sans recycle de l'effluent gazeux comprenant les composés ayant un nombre d'atomes de carbones inférieur ou égal à 3 (C2+C3) et issu de l'étape c) de séparation.

### Description de la charge bioéthanol

La charge utilisée dans ces exemples est une charge de bioéthanol qui a été purifiée par une succession d'étapes de distillation et de passages sur tamis moléculaires afin de répondre aux spécifications suivantes :

**Tableau 1 : Description de la charge purifiée**

| Teneur en % poids | |
|---|---|
| EtOH % poids | 99% |
| Methanol | <0,05% |
| Butanol | <0,1% |
| Autres alcools | <0,05% |
| teneur totale en alcool autre que éthanol % poids | <0,2% |
| composés oxygénés autre que alcools | <0,1% |
| H2O % poids | <1% |
| impuretés cationiques totale % poids | <0,005% |
| impuretés anioniques totale % poids | <0,005% |

### Étape b) : transformation de la charge

La charge purifiée subit ensuite une étape de transformation en un effluent oléfinique léger en présence du catalyseur zéolithique C1 décrit ci dessous. Elle est mélangée avec une partie de l'eau produite sur l'étape c) de séparation, de façon à obtenir un rapport molaire de 2.

Par contre, aucune recycle de l' effluent gazeux comprenant les composés ayant un nombre d'atomes de carbones inférieur ou égal à 3 (C2+C3) et issu de l'étape c) de séparation n'est mis en oeuvre.

### Préparation du catalyseur C1 utilisé dans l'étape b)

La zéolithe ferrierite commerciale de rapport Si/Al égal à 20 sous sa forme NH4+ sont introduit dans un réacteur lit fixe. Le catalyseur est calciné sous air sec à 450°C pendant 3h de façon à décomposer l'ion ammonium en ammoniac et H+.

Le catalyseur C1 est préparé par malaxage de la zéolithe ferrierite ainsi obtenue avec une alumine de type SB3 fourni par la société Condea. La pâte malaxée est alors extrudée au travers d'une filière de diamètre 1,4 mm. Les extrudés ainsi obtenus sont séchés à 120°C pendant 5 heures puis calcinés sous air sec à 500°C pendant 2 heures sous air. La teneur pondérale en zéolithe est de 40% poids.

L'étape b) du procédé selon l'invention est mise en oeuvre de manière à maximiser la production d'oléfines ayant entre 4 et 6 atomes de carbones.

L'étape b) opère à une température de 325°C, à une pression de 0,5 MPa et à une vitesse pondérale horaire de 2 h⁻¹.

La répartition des composés hydrocarbonés produits par nombre de carbone lors de l'étape b) et la composition de l'effluent oléfinique léger produit à l'issue de l'étape b) sont mesurées par chromatographie en phase gazeuse (CPG), et données dans les tableaux 2 et 3.

**Tableau 2 : répartition des composés hydrocarbonés produits par nombre de carbone de l'effluent oléfinique léger en sortie de l'étape b)**

| Composés | % poids par rapport à la masse totale des composés hydrocarbonés formés |
|---|---|
| C2 | 30 |
| C3 | 5,7 |
| C4-C6 | 57,0 |
| comprenant | 87,0 % oléfines dans coupe C4-C6 |
| C7+ | 7,3 |

| | |
|---|---|
| C2 = composés hydrocarbonés ayant un nombre de carbones égal à 2 C3 = composés hydrocarbonés ayant un nombre de carbones égal à 3 (propylène et/ou propane) C4-C6 = hydrocarbures ayant entre 4 et 6 atomes de carbones C7+ = hydrocarbures ayant un nombre de carbones supérieur ou égal à 7 | |

**Tableau 3 : composition de l'effluent oléfinique léger produit à l'issue de l'étape b)**

| Types de composés | % poids par rapport à la masse totale des composés hydrocarbonés formés |
|---|---|
| Oléfines | 86 |
| Aromatiques | 1,6 |
| Paraffines et naphtènes | 12,4 |

La conversion de l'éthanol est de 99,5 %.

### Étape c) : séparation.

L'effluent oléfinique léger issu de l'étape b) subit ensuite une étape de séparation de manière à éliminer au moins une partie de l'eau formée lors de l'étape b).

L'étape de séparation est mise en oeuvre dans deux ballons séparateurs successifs. L'effluent oléfinique léger issu de l'étape b) subit dans un premier temps une séparation flash dans un premier ballon séparateur à 40°C et 0,57 MPa à l'issue de laquelle trois phases sont obtenues : une phase gazeuse, une phase hydrocarbure liquide et une phase aqueuse. Une partie de l'eau obtenue est recyclée dans l'étape b) de façon à obtenir le rapport de dilution de la charge de l'étape b). La phase hydrocarbonée liquide est envoyée dans le réacteur d'oligomérisation d) et la phase gazeuse subit une deuxième séparation flash dans un deuxième ballon séparateur refroidie à 5°C à l'issue de laquelle 3 phases sont obtenues : une phase gazeuse, une phase liquide hydrocarbonée et une phase aqueuse.

La phase gazeuse qui constitue l'effluent hydrocarboné gazeux ayant majoritairement un nombre d'atome de carbones inférieur ou égal à 3 est envoyée en totalité dans l'étape d) d'oligomérisation. La phase liquide hydrocarbonée est quant à elle également envoyée dans l'étape d) d'oligomérisation et la phase aqueuse est envoyée vers le traitement d'eau.

L'effluent liquide hydrocarboné oléfinique ayant majoritairement plus de 4 atomes de carbone est donc composé des deux phases hydrocarbonées liquides, obtenues à l'issue des séparations flash dans les ballons séparateurs à 40° C et à 5°C.

La charge du réacteur d'oligomérisation est composée de l'effluent hydrocarboné gazeux ayant majoritairement un nombre d'atome de carbones inférieur ou égal à 3 ainsi que de l'effluent liquide hydrocarboné oléfinique ayant majoritairement plus de 4 atomes de carbone, après passage sur tamis moléculaire de type 3A pour atteindre une teneur en eau inférieure à 10 ppm.

### Étape d) : Oligomérisation.

La charge entrant dans l'étape d) d'oligomérisation est donc l'effluent issu de l'étape b) et séparée de l'eau.

L'étape d) d'oligomérisation opère en présence d'un catalyseur zéolithique C2 décrit ci dessous et à une température de 250°C, à une pression de 5 MPa et à une vitesse pondérale horaire de 1 h⁻¹.

### Préparation du catalyseur C2 utilisé dans l'étape d)

La zéolithe ZSM-5 commerciale de rapport Si/AI égal à 40 sous sa forme NH4+ sont introduit dans un réacteur lit fixe. Le catalyseur est calciné sous air sec à 450°C pendant 3h de façon à décomposer l'ion ammonium en ammoniac et H⁺.

La température du réacteur est ensuite ramenée à 150°C, puis une pression partielle de 0,15 bar de TEOS (Si(OEt)₄) est ajoutée dans un flux d'azote. Après 2 heures de réaction, la zéolithe est strippée pendant 2 heures à 150°C pour évacuer le TEOS n'ayant pas réagi. La décomposition du TEOS se fait sous air à 450°C pendant 3 heures ce qui permet la formation d'une couche de silice amorphe à la surface du catalyseur

Le catalyseur C2 est préparé par malaxage de la zéolithe ZSM-5 ainsi obtenue avec une alumine de type SB3 fourni par la société Condea. La pâte malaxée est alors extrudée au travers d'une filière de diamètre 1,4 mm. Les extrudés ainsi obtenus sont séchés à 120°C pendant 5 heures puis calcinés sous air sec à 500°C pendant 2 heures sous air. La teneur pondérale en zéolithe est de 60% poids.

L'effluent issu de l'étape d) d'oligomérisation subit ensuite une étape de fractionnement et est alors détendu à 2,1 MPa et à 150°C où deux phases sont produites : une phase liquide et une phase gazeuse. Cette dernière obtenue est ensuite refroidie à 40 °C : la partie condensée est alors mélangée avec la phase liquide obtenue à 2,1 MPa et à 150°C. Ce mélange constitue alors la charge de la colonne à distiller. La phase vapeur, qui n'a pas été condensée à 40°C, permet d'éliminer un flux riche en composés C2 (70% mol). La charge de la colonne est alors fractionnée en plusieurs produits : un flux vapeur riche en C2, un effluent léger riche en C3-C4, une coupe essence et une base distillats moyens gazole et kérosène.

Les rendements des différents produits obtenus sont indiqués dans le tableau 4.

**Tableau 4 : rendements**

| | % poids |
|---|---|
| C2 | 30 |
| C3-C4 | 6 |
| base essence | 17 |
| base distillats moyens (kérosène et gazole) | 47 |

A partir d'une tonne d'éthanol pur, 287 kg de bases distillats moyens est obtenu ainsi que 103 kg de base essence.

### Exemple 2 selon l'invention :

L'enchainement selon l'invention est mis en oeuvre dans l'exemple 2 avec recycle de l'un effluent gazeux comprenant les composés ayant un nombre d'atomes de carbones inférieur ou égal à 3 (C2+C3) et issu de l'étape c) de séparation.

La même charge bioéthanol purifiée, comme dans le tableau 1 de l'exemple 1, subit une étape de transformation en un effluent oléfinique léger en présence du même catalyseur zéolithique C1 décrit ci dessus. Elle est mélangée avec une partie de l'eau produite sur l'étape c) de séparation, de façon à obtenir un rapport molaire de 2.

La totalité d'un effluent gazeux comprenant les composés ayant un nombre d'atomes de carbones inférieur ou égal à 3 (C2+C3) et issu de l'étape c) de séparation est également recyclé dans l'étape b).

### Étape b) : transformation de la charge

L'étape b) du procédé selon l'invention est mise en oeuvre de manière à maximiser la production d'oléfines ayant entre 4 et 6 atomes de carbones dans les mêmes conditions que celles de l'étape b) de l'exemple 1 a savoir, à une température de 325°C, à une pression de 0,5 MPa et à une vitesse pondérale horaire de 2 h-1.

La répartition des composés hydrocarbonés produits par nombre de carbone lors de l'étape b) et la composition de l'effluent oléfinique léger produit à l'issue de l'étape b) sont mesurées par chromatographie en phase gazeuse (CPG), et données dans les tableaux 5 et 6.

**Tableau 5 : répartition des composés hydrocarbonés produits par nombre de carbone de l'effluent oléfinique léger en sortie de l'étape b)**

| Composés | % poids par rapport à la masse totale des composés hydrocarbonés formés |
|---|---|
| C2 | 35,9 |
| C3 | 13,2 |
| C4-C6 | 45,4 |
| comprenant | 82,6% oléfines C4-C6 |
| C7+ | 5,5 |

| | |
|---|---|
| C2 = composés hydrocarbonés ayant un nombre de carbones égal à 2 C3 = composés hydrocarbonés ayant un nombre de carbones égal à 3 (propylène et/ou propane) C4-C6 = hydrocarbures ayant entre 4 et 6 atomes de carbones C7+ = hydrocarbures ayant un nombre de carbones supérieur ou égal à 7 | |

**Tableau 6 : composition de l'effluent oléfinique léger produit à l'issue de l'étape b)**

| Types de composés | % poids par rapport à la masse totale des composés hydrocarbonés formés |
|---|---|
| Oléfines | 64,9 |
| Aromatiques | 1,3 |
| Paraffines et naphtènes | 33,8 |

La conversion de la charge éthanol dans l'étape b) est de 99,9 %.

### Étape c) : séparation.

L'effluent oléfinique léger issu de l'étape b) subit ensuite une étape de séparation de manière à éliminer au moins une partie de l'eau formée lors de l'étape b) et à produire un effluent gazeux ayant majoritairement un nombre d'atomes de carbone inférieur ou égale à 3 et au moins un effluent liquide hydrocarboné oléfinique ayant majoritairement plus de 4 atomes de carbone.

L'étape de séparation est mise en oeuvre dans deux ballons séparateurs successifs. L'effluent oléfinique léger issu de l'étape b) subit dans un premier temps une séparation flash dans un premier ballon séparateur à 40°C et 0,57 MPa à l'issue de laquelle trois phases sont obtenues : une phase gazeuse, une phase hydrocarbure liquide et une phase aqueuse. Une partie de l'eau obtenue est recyclée dans l'étape b) de façon à obtenir le rapport de dilution de la charge de l'étape b). La phase hydrocarbonée liquide est envoyée dans le réacteur d'oligomérisation d) et la phase gazeuse subit une deuxième séparation flash dans un deuxième ballon séparateur refroidie à 5°C à l'issue de laquelle 3 phases sont obtenues : une phase gazeuse, une phase liquide hydrocarbonée et une phase aqueuse. La phase gazeuse qui constitue l'effluent hydrocarboné gazeux ayant majoritairement un nombre d'atome de carbones inférieur ou égal à 3 est alors recyclée dans l'étape réactionnelle b), en considérant une purge très faible, fixée à 6 % en masse de ladite phase gazeuse produite. La phase liquide hydrocarbonée est quant à elle également envoyée dans la zone réactionnelle d'oligomérisation d), la phase aqueuse est envoyée vers le traitement d'eau. L'effluent liquide hydrocarboné oléfinique ayant majoritairement plus de 4 atomes de carbone est composé des deux phases hydrocarbonées liquides, obtenues à l'issue des séparations flash dans les ballons séparateurs à 40° C et à 5°C.

La composition de l'effluent hydrocarboné gazeux ayant majoritairement un nombre d'atomes de carbone inférieur ou égal à 3 est donnée dans le tableau 7.

**Tableau 7: Composition de l'effluent hydrocarboné gazeux ayant majoritairement un nombre d'atomes de carbone inférieur ou égal à 3**

| | % pds de l'effluent |
|---|---|
| C2 | 63 |
| C3 | 18 |
| C2+C3 | 81 |
| C4 | 10,4 |
| C5+ | 8,6 |

La totalité de l'effluent liquide hydrocarboné oléfinique ayant plus de 4 atomes de carbone est envoyée dans l'étape d) d'oligomérisation, après passage sur tamis moléculaire de type 3A pour atteindre une teneur en eau inférieure à 10 ppm.

### Étape d) : Oligomérisation.

Dans le tableau 8 est indiquée la composition de la charge entrant dans l'étape d) d'oligomérisation.

**Tableau 8 : charge de l'étape d)**

| | % poids |
|---|---|
| C2+C3 | 10,0 |
| C4-C6 | 78,0 |
| | dont 84% d'oléfines |
| C7+ | 12,0 |

L'étape d) d'oligomérisation opère en présence du même catalyseur zéolithique C2 décrit dans l'exemple 1 et dans les mêmes conditions opératoires à savoir à une température de 250°C, à une pression de 5 MPa et à une vitesse pondérale horaire de 1 h-1.

L'effluent issu de l'étape d) d'oligomérisation subit ensuite une étape de fractionnement et est alors détendu à 2,1 MPa et à 150°C où deux phases sont produites : une phase liquide et une -phase gazeuse. Cette dernière obtenue est ensuite refroidie à 40 °C : la partie condensée est alors mélangée avec la phase liquide obtenue à 2,1 MPa et à 150°C. Ce mélange constitue alors la charge de la colonne à distiller. La phase vapeur, qui n'a pas été condensée à 40°C, permet d'éliminer un flux riche en composés C2 (70% mol). La charge de la colonne est alors fractionnée en plusieurs produits : un flux vapeur riche en C2, un effluent léger riche en C3-C4, une coupe essence et une base distillats moyens gazole et kérosène.

Les rendements des différents produits obtenus sont indiqués dans le tableau 9.

**Tableau 9 : rendements**

| | % poids |
|---|---|
| C2 | 4,3 |
| C3-C4 | 11,2 |
| base essence | 21,6 |
| base distillats moyens (kérosène et gazole) | 62,9 |

Le recyclage de l'effluent gazeux comprenant les composés ayant un nombre d'atomes de carbones inférieur ou égal à 3 (C2+C3) et issu de l'étape c) de séparation permet de maximiser le rendement en distillats moyens.

Ainsi à partir d'une tonne d'éthanol pur, 371 kg de bases distillats moyens est obtenu ainsi que 127 kg de base essence.

### Exemple 3 : comparatif

L'exemple comparatif met en oeuvre un enchainement dans lequel un catalyseur C3 à base de zéolithe ZSM-5 est utilisé à la fois dans une première étape de transformation de la charge en effluent oléfinique léger puis dans une deuxième étape d'oligomérisation de l'effluent issu de l'étape précédente, les deux étapes étant mises en oeuvre dans les mêmes conditions opératoires que celles des exemples 1 et 2.

### Préparation du catalyseur C3 utilisé dans l'étape b)

La zéolithe ZSM-5 commerciale de rapport Si/Al égal à 120 sous sa forme NH₄⁺ sont introduit dans un réacteur lit fixe. Le catalyseur est calciné sous air sec à 450°C pendant 3h de façon à décomposer l'ion ammonium en ammoniac et H⁺.

Le catalyseur C3 est préparé par malaxage de la zéolithe ZSM-5 ainsi obtenue avec une alumine de type SB3 fourni par la société Condea. La pâte malaxée est alors extrudée au travers d'une filière de diamètre 1,4 mm. Les extrudés ainsi obtenus sont séchés à 120°C pendant 5 heures puis calcinés sous air sec à 500°C pendant 2 heures sous air. La teneur pondérale en zéolithe est de 40% poids.

La même charge bioéthanol purifiée, comme dans le tableau 1 de l'exemple 1, subit une étape de transformation en un effluent oléfinique léger en présence du catalyseur zéolithique C3 décrit ci dessus. Les conditions opératoires sont identiques à celles de l'étape b) des exemples 1 et 2.

La répartition des composés hydrocarbonés produits par nombre de carbone lors de l'étape b) et la composition de l'effluent oléfinique léger produit à l'issue de l'étape b) sont mesurées par chromatographie en phase gazeuse (CPG), et données dans les tableaux 10 et 11.

**Tableau 10 : répartition des composés hydrocarbonés produits par nombre de carbone de l'effluent oléfinique léger en sortie de l'étape de transformation b)**

| Composés | % poids par rapport à la masse totale des composés hydrocarbonés formés |
|---|---|
| C2 | 10 |
| C3 | 9,2 |
| C4-C6 | 46,8 |
| comprenant | 47,3 % oléfines |
| C7+ | 34,0 |

**Tableau 11 : composition de l'effluent oléfinique léger produit à l'issue de l'étape b)**

| Types de composés | % poids par rapport à la masse totale des composés hydrocarbonés formés |
|---|---|
| Oléfines | 45,0 |
| Aromatiques | 18,6 |
| Paraffines et naphtènes | 36,4 |

On constate que l'utilisation du catalyseur C3 à base de ZSM 5 provoque la formation d'une quantité non négligeable de composés aromatiques.

Une étape de séparation comme décrite dans l'exemple 2 est mise en oeuvre avant une étape d'oligomérisation de l'effluent séparé en présence du catalyseur C3 et dans des conditions identiques à l'étape d) des exemples 1 et 2. L'effluent issu de l'étape d) d'oligomérisation subit ensuite une étape de fractionnement et les rendements des différents produits obtenus sont indiquées dans le tableau 12.

**Tableau 12 : rendements**

| | % poids |
|---|---|
| C2 | 10 |
| C3-C4 | 16,2 |
| base essence | 44,4 |
| base distillats moyens (kérosène et gazole) | 29,4 |

A partir d'une tonne d'éthanol pur, 180 kg de bases distillats moyens est obtenu ainsi que 271 kg de base essence.

On constate donc que l'enchainement selon l'invention, mettant en oeuvre des catalyseurs spécifiques dans les différentes étapes permet de maximiser le rendement en distillats moyens obtenus. En particulier, l'utilisation d'un catalyseur selon l'invention dans l'étape b) permet d'augmenter notablement la quantité de bases distillats moyens obtenus : le gain réalisé est de 59% dans l'exemple 1 mettant en oeuvre un catalyseur selon l'invention dans l'étape b) par rapport à l'exemple 3 qui met en oeuvre dans son étape b) un catalyseur non conforme à l'invention à base de ZSM 5.

## Revendications

1. Procédé de production de bases hydrocarbonées distillats moyens à partir d'une charge éthanol produite à partir de source renouvelable issue de la biomasse, ledit procédé comprenant au moins :
a) une étape de purification de ladite charge,
b) une étape de transformation de ladite charge purifiée issue de l'étape a) en un effluent oléfinique léger comprenant au moins 30% poids d'oléfines ayant entre 4 à 6 atomes de carbone par rapport à la masse totale des composés hydrocarbonés formés, ladite étape opérant en présence d'un catalyseur zéolithe ferrierite,
c) une étape de séparation de l'effluent oléfinique issu de l'étape b) de manière à éliminer au moins une partie de l'eau formée lors de l'étape b) et à produire au moins un effluent gazeux hydrocarboné ayant majoritairement un nombre d'atomes de carbone inférieur ou égale à 3 et au moins un effluent liquide hydrocarboné oléfinique ayant majoritairement plus de 4 atomes de carbone,
d) une étape d'oligomérisation d'au moins une partie des effluents hydrocarbonés issus de l'étape c) en présence d'un catalyseur amorphe comprenant de la silice alumine ou zéolithique choisie parmi les zéolithes ZSM-5, NU-10 et ZBM-30 prises seules ou en mélange, produisant des bases hydrocarbonées distillats moyens,
e) une étape de fractionnement de l'effluent issu de l'étape d) d'oligomérisation.

2. Procédé selon la revendication 1 dans lequel l'étape b) opère à une température comprise entre 250 et 600°C, à une pression comprise entre 0 et 5MPa, et à une vitesse volumique horaire comprise entre 0,1 et 50 h⁻¹.

3. Procédé selon l'une des revendications 1 à 2 dans lequel au moins une partie dudit effluent gazeux ayant majoritairement un nombre d'atomes de carbone inférieur ou égale à 3 issu de l'étape de séparation est recyclé en amont de l'étape b) de transformation de la charge purifiée en un effluent oléfinique léger.

4. Procédé selon l'une des revendications 1 à 2 dans lequel la totalité dudit effluent gazeux ayant un nombre d'atomes de carbone inférieur ou égal à 3 issu de l'étape de séparation est envoyé dans une section réactionnelle d'oligomérisation comprenant un catalyseur métallique homogène ou un catalyseur hétérogène.

5. Procédé selon la revendication 4 dans lequel l'effluent issu de ladite section réactionnelle d'oligomérisation est séparé dans une étape de séparation en un effluent composé majoritairement d'hydrocarbures ayant moins de 9 atomes de carbones et en un autre effluent composé majoritairement d'hydrocarbures ayant plus de 9 atomes de carbones.

6. Procédé selon la revendication 4 dans lequel l'effluent issu de ladite section réactionnelle d'oligomérisation est séparé dans une étape de séparation en un effluent composé majoritairement d'hydrocarbures ayant moins de 12 atomes de carbones et en un autre effluent composé majoritairement d'hydrocarbures ayant plus de 12 atomes de carbones.

7. Procédé selon la revendication 4 ou 5 dans lequel ledit effluent composé majoritairement d'hydrocarbures ayant plus de 9 ou 12 atomes de carbones est envoyé dans l'étape e) de séparation et l'effluent composé majoritairement d'hydrocarbures ayant moins de 9 ou 12 atomes de carbones est envoyé dans l'étape d) d'oligomérisation.

8. Procédé selon l'une des revendications 1 à 5 dans lequel la totalité de l'effluent liquide hydrocarboné oléfinique ayant majoritairement plus de 4 atomes de carbone issu de l'étape c) de séparation est envoyée dans l'étape d'oligomérisation d), en mélange avec au moins la partie de l'effluent gazeux hydrocarboné ayant majoritairement un nombre d'atomes de carbone inférieur ou égal à 3 issu de l'étape c) et n'ayant pas été recyclée en amont de l'étape b).

9. Procédé selon l'une des revendications 1 à 8 dans lequel au moins une partie de l'effluent léger comprenant les composés C2-C4 et/ou au moins une partie de la coupe essence issus de l'étape de fractionnement e) peuvent avantageusement être recyclées dans l'étape d) d'oligomérisation du procédé selon l'invention.

10. Procédé selon l'une des revendications 1 à 9 dans lequel au moins une partie de la base distillats moyens issue de l'étape de fractionnement e) de l'effluent issu du réacteur d'oligomérisation subit une étape d'hydrogénation des oléfines produites, en présence d'un catalyseur comprenant au moins un métal du groupe VIII choisi parmi le palladium et le nickel pris seul ou en mélange, et un support choisi parmi l'alumine, la silice ou la silice-alumine.

11. Procédé selon la revendication 10 dans lequel une étape de séparation suivant l'étape d'hydrogénation est mise en oeuvre pour permettre le fractionnement en une coupe kérosène et/ou une coupe gazole et/ ou une coupe ayant un point d'ébullition supérieur à 360°C.

12. Procédé selon l'une des revendications 1 à 11 dans lequel au moins une partie de la base distillats moyens est recyclée dans l'étape c) de séparation.

## Patentansprüche

1. Verfahren zur Herstellung von Kohlenwasserstoffdestillat-Basen aus einer Ethanol-Charge aus einer erneuerbaren Quelle aus Biomasse, wobei das Verfahren mindestens umfasst:
a) einen Schritt der Reinigung der Charge,
b) einen Schritt der Transformation der gereinigten Charge aus Schritt a) zu einem leichten Olefin-Abstrom, umfassend mindestens 30 Gew.-% Olefine mit zwischen 4 bis 6 Kohlenstoffatomen in Bezug auf die Gesamtmasse der gebildeten Kohlenwasserstoff-Verbindungen, wobei der Schritt in Anwesenheit eines Zeolith-Ferrierit-Katalysators betrieben wird,
c) einen Schritt der Trennung des Olefin-Abstroms aus Schritt b), um mindestens einen Teil des während Schritt b) gebildeten Wassers zu entfernen, und um mindestens einen gasförmigen Kohlenwasserstoff-Abstrom mit einer Anzahl von Kohlenstoffatomen von mehrheitlich kleiner oder gleich 3 und mindestens einen flüssigen Kohlenwasserstoff-Olefin-Abstrom mit mehrheitlich mehr als 4 Kohlenstoffatomen zu erzeugen,
d) einen Schritt der Oligomerisierung mindestens eines Teils der Kohlenwasserstoffabströme aus Schritt c) in Anwesenheit eines amorphen Katalysators, umfassend Siliciumdioxid-Aluminiumoxid, oder eines Zeolith-Katalysators, ausgewählt aus den Zeolithen ZSM-5, NU-10 und ZBM-30, allein oder in Mischung, wobei Kohlenwasserstoffmitteldestillat-Basen hergestellt werden,
e) einen Schritt der Fraktionierung des Abstroms aus dem Oligomerisierungsschritt d).

2. Verfahren nach Anspruch 1, wobei der Schritt b) bei einer Temperatur zwischen 250 und 600 °C, bei einem Druck zwischen 0 und 5 MPa und bei einer Volumengeschwindigkeit pro Stunde zwischen 0,1 und 50 h⁻¹ betrieben wird.

3. Verfahren nach einem der Ansprüche 1 bis 2, wobei mindestens ein Teil des gasförmigen Abstroms mit einer Anzahl von Kohlenstoffatomen von mehrheitlich kleiner oder gleich 3 aus dem Trennschritt stromaufwärts von dem Transformationsschritt b) der gereinigten Charge zu einen leichten Olefin-Abstrom rückgeführt wird.

4. Verfahren nach einem der Ansprüche 1 bis 2, wobei die Gesamtheit des gasförmigen Abstroms mit einer Anzahl von Kohlenstoffatomen von kleiner oder gleich 3 aus dem Trennschritt in eine Oligomerisationsreaktionssektion, umfassend einen homogenen Metallkatalysator oder einen heterogenen Katalysator, geschickt wird.

5. Verfahren nach Anspruch 4, wobei der Abstrom aus der Oligomerisationsreaktionssektion in einem Trennschritt in einen Abstrom, bestehend mehrheitlich aus Kohlenwasserstoffen mit weniger als 9 Kohlenstoffatomen, und in einen anderen Abstrom, bestehend mehrheitlich aus Kohlenwasserstoffen mit mehr als 9 Kohlenstoffatomen, getrennt wird.

6. Verfahren nach Anspruch 4, wobei der Abstrom aus der Oligomerisationsreaktionssektion in einem Trennschritt in einen Abstrom, bestehend mehrheitlich aus Kohlenwasserstoffen mit weniger als 12 Kohlenstoffatomen, und in einen anderen Abstrom, bestehend mehrheitlich aus Kohlenwasserstoffen mit mehr als 12 Kohlenstoffatomen, getrennt wird.

7. Verfahren nach Anspruch 4 oder 5, wobei der Abstrom, der mehrheitlich aus Kohlenwasserstoffen mit mehr als 9 oder 12 Kohlenstoffatomen besteht, in den Trennschritt e) geschickt wird, und der Abstrom, der mehrheitlich aus Kohlenwasserstoffen mit weniger als 9 oder 12 Kohlenstoffatomen besteht, in den Oligomerisierungsschritt d) geschickt wird.

8. Verfahren nach einem der Ansprüche 1 bis 5, wobei die Gesamtheit des flüssigen Kohlenwasserstoff-Olefin-Abstroms mit mehrheitlich mehr als 4 Kohlenstoffatomen aus dem Trennschritt c) in den Oligomerisierungsschritt d) geschickt wird, in Mischung mit mindestens dem Teil des gasförmigen Kohlenwasserstoff-Abstroms mit einer Anzahl von Kohlenstoffatomen von mehrheitlich kleiner oder gleich 3 aus Schritt c), und ohne stromaufwärts von Schritt b) rückgeführt worden zu sein.

9. Verfahren nach einem der Ansprüche 1 bis 8, wobei mindestens ein Teil des leichten Abstroms, umfassend C2-C4-Verbindungen, und/oder mindestens ein Teil des Benzinschnitts, die aus dem Fraktionierungsschritt e) stammen, vorteilhaft in den Oligomerisierungsschritt d) des Verfahrens gemäß der Erfindung rückgeführt werden können.

10. Verfahren nach einem der Ansprüche 1 bis 9, wobei mindestens ein Teil der Mitteldestillat-Basis aus dem Fraktionierungsschritt e) des Abstroms aus dem Oligomerisationsreaktor einem Hydrierungsschritt der erzeugten Olefine unterzogen wird, in Anwesenheit eines Katalysators, umfassend mindestens ein Metall der Gruppe VIII, ausgewählt aus Palladium und Nickel, allein oder in Mischung, und einen Träger, ausgewählt aus Aluminiumoxid, Siliciumdioxid oder Siliciumdioxid-Aluminiumoxid.

11. Verfahren nach Anspruch 10, wobei ein Trennschritt, der dem Hydrierungsschritt folgt, durchgeführt wird, um die Fraktionierung in einen Kerosinschnitt und/oder einen Gasölschnitt und/oder einen Schnitt mit einem Siedepunkt von mehr als 360 °C zu gestatten.

12. Verfahren nach einem der Ansprüche 1 bis 11, wobei mindestens ein Teil der Mitteldestillat-Basis in den Trennschritt c) rückgeführt wird.

## Claims

1. Process for the production of middle distillate hydrocarbon bases from an ethanol feedstock that is produced from a renewable source that is obtained from biomass, whereby said process comprises at least:
a) One stage for purification of said feedstock,
b) One stage for transformation of said purified feedstock obtained from stage a) into a light olefinic effluent that comprises at least 30% by weight of olefins having between four to six carbon atoms relative to the total mass of the hydrocarbon compounds that are formed, whereby said stage works in the presence of a ferrierite zeolite catalyst,
c) One stage for separation of the olefinic effluent that is obtained from stage b) in such a way as to eliminate at least a portion of the water that is formed during stage b) and to produce at least one hydrocarbon gaseous effluent that for the most part has three or fewer carbon atoms and at least one olefinic hydrocarbon liquid effluent that for the most part has more than four carbon atoms,
d) One stage for oligomerization of at least a portion of the hydrocarbon effluents that are obtained from stage c) in the presence of an amorphous catalyst comprising silica alumina or a zeolitic catalyst selected from the following zeolites: ZSM-5, NU-10 and ZBM-30 taken by themselves or in a mixture, producing middle distillate hydrocarbon bases,
e) One stage for fractionation of the effluent that is obtained from the oligomerization stage d).

2. Process according to Claim 1, wherein stage b) works at a temperature of between 250 and 600°C, at a pressure of between 0 and 5 MPa, and at an hourly volumetric flow rate of between 0.1 and 50 h⁻¹.

3. Process according to one of Claims 1 to 2, wherein at least a portion of said gaseous effluent that for the most part has three or fewer carbon atoms obtained from the separation stage is recycled upstream from stage b) for transformation of the purified feedstock into a light olefinic effluent.

4. Process according to one of Claims 1 to 2, wherein all of said gaseous effluent that has three or more carbon atoms obtained from the separation stage is sent into a reaction section for oligomerization comprising a homogeneous metal catalyst or a heterogeneous catalyst.

5. Process according to Claim 4, wherein the effluent that is obtained from said reaction section for oligomerization is separated in a separation stage into an effluent that for the most part consists of hydrocarbons and that has fewer than 9 carbon atoms and into another effluent that for the most part consists of hydrocarbons and that has more than 9 carbon atoms.

6. Process according to Claim 4, wherein the effluent that is obtained from said reaction section for oligomerization is separated in a separation stage into an effluent that for the most part consists of hydrocarbons and that has fewer than 12 carbon atoms and into another effluent that for the most part consists of hydrocarbons and that has more than 12 carbon atoms.

7. Process according to Claim 4 or 5, wherein said effluent that for the most part consists of hydrocarbons and that has more than 9 or 12 carbon atoms is sent into separation stage e), and the effluent that for the most part consists of hydrocarbons and that has fewer than 9 or 12 carbon atoms is sent into oligomerization stage d).

8. Process according to one of Claims 1 to 5, wherein all of the olefinic hydrocarbon liquid effluent that for the most part has more than 4 carbon atoms obtained from separation stage c) is sent into oligomerization stage d), in a mixture with at least the portion of the hydrocarbon gaseous effluent that for the most part has 3 or fewer carbon atoms obtained from stage c) and that has not been recycled upstream from stage b).

9. Process according to one of Claims 1 to 8, wherein at least a portion of the light effluent that comprises the C2-C4 compounds and/or at least a portion of the gasoline fraction obtained from fractionation stage e) can advantageously be recycled in oligomerization stage d) of the process according to the invention.

10. Process according to one of Claims 1 to 9, wherein at least a portion of the middle distillate base obtained from fractionation stage e) of the effluent obtained from the oligomerization reactor undergoes a stage for hydrogenation of the olefins produced, in the presence of a catalyst that comprises at least one metal of group VIII, selected from among palladium and nickel, taken by itself or in a mixture, and a substrate that is selected from among alumina, silica or silica-alumina.

11. Process according to Claim 10, wherein a separation stage following the hydrogenation stage is implemented for making possible the fractionation into a kerosene fraction and/or a gas oil fraction and/or a fraction that has a boiling point that is higher than 360°C.

12. Process according to one of Claims 1 to 11, wherein at least a portion of the middle distillate base is recycled in separation stage c).
